# EUROPEAN PATENT SPECIFICATION

(11) **EP 1 774 210 B1**
(45) Date of publication and mention of the grant of the patent: **17.06.2009**
(21) Application number: 05757625.8
(22) Date of filing: 05.07.2005
(51) Int. Cl.: F16K 31/00

(54) **A MIXING VALVE**
MISCHVENTIL
MELANGEUR

(30) Priority: 29.07.2004 GB 0416925; 18.04.2005 GB 0507788
(43) Date of publication of application: 18.04.2007
(73) Proprietor: GSA Industries (Aust.) Pty Ltd, Melbourne, VIC 3000 (AU)
(72) Inventor: WINTER, Eric, Evesham, Worcestershire WR11 4RA (GB)
(74) Representative: Lambert, Ian Robert
(86) International application number: PCT/GB2005/002633
(87) International publication number: WO 2006/010880

(56) References cited:
- EP-A- 0 897 141
- WO-A-90/04141
- DE-A1- 3 422 336
- FR-A- 2 486 194

## Description

The present invention relates to a mixing valve and in particular to a mixing valve for use with water in an underfloor heating system.

Underfloor heating systems are generally constructed of a complex multi-layer network of pipes connected to a heat source (normally a boiler) of a building. Conventionally, in such a system the entire pipework network throughout the building is linked to a central distribution point, commonly known as a manifold. Heating fluid flows through this manifold to and from the heat source of the building.

All manifolds include a mixing valve which receives hot water from a boiler and mixes this hot water with cooler water from the returning loop of the pipe network. The hot and cool water mix within an internal chamber of the valve and then flows from the valve to a pump connected to the flow side of the system. A conventional heating system also requires pre-fabricated pipework to act as a bypass to allow a proportion of the cooler water to return to the boiler to be re-heated. This pre-fabricated pipework is connected to the mixing valve.

WO 90/04141 discloses a fixture apparatus having a combined shut-off valve and check valve a mixing valve coupled into a cold water inlet pipe and a hot water outlet pipe to a compressor. This disclosure relates to a conventional heating system which requires pre-fabricated pipe work to act as a bypass to allow a proportion of cooler water to return to the boiler to be reheated.

The present invention seeks to alleviate the aforementioned problems associated with conventional systems by providing an improved mixing valve that incorporates an in situ bypass. As such, a pre-fabricated bypass pipework is not required allowing the valve to be connected directly to a pump without the need for a separate bracket.

In one aspect, the invention provides a mixing valve comprising a main housing having an inner mixing chamber, the housing including a hot fluid inlet, a cold fluid inlet and a main outlet linked to the inner chamber thereby to allow hot and cold fluid to flow into the mixing chamber to be mixed therein, and to flow from the mixing chamber via the main outlet, the housing further including a cold fluid outlet linked directly to the cold fluid inlet via a conduit which has no openings to the mixing chamber, to allow a proportion of cold fluid entering the valve housing through the cold fluid inlet to flow across the valve housing without entering the mixing chamber.

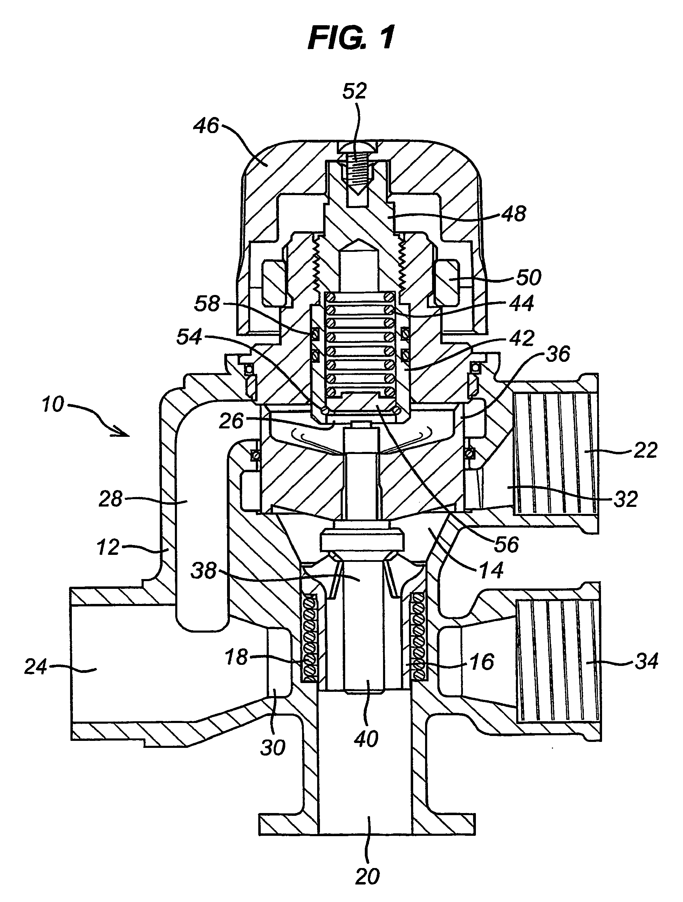

The invention will now be described by way of example with reference to the accompanying diagrammatic drawing, in which :-
Figure 1 is a side cross-section view of a mixing valve constructed in accordance with the present invention.

The figure shows a mixing valve 10 according to the present invention. The valve 10 comprises a main housing 12 having mixing chamber 14 which includes a mixing tube 16 retained within the mixing chamber 14 by a return spring 18. The bottom of the mixing chamber 14 communicates with a main fluid outlet 20.

The mixing valve 10 has hot and cold fluid inlets 22, 24 respectively. The hot inlet 22 extends into the mixing chamber 14 within the mixing valve 10. In use, when desired, hot fluid (for example water) flowing along the hot inlet pipe 22 is able to flow into the mixing chamber 14 via inlet opening 32.

The cold fluid inlet 24 extends into the housing 12 of the mixing valve 10 whereupon it divides into two cold fluid pipes 28, 30. The first cold fluid pipe 28 extends through the housing 12 and into the mixing chamber 14. In use, when desired, cold fluid (for example water) flowing along the first cold fluid pipe 28 is able to flow into the mixing chamber 14 via inlet opening 26.

The second pipe 30 extends through and across the housing 12, forming a cold fluid outlet 34 on the other side of mixing valve 10. Although not shown in the Figure, the second pipe 30 crosses the housing 12 either side of the mixing valve 10 allowing, in use, cold fluid travelling along the second pipe 30 to flow either side of the mixing valve 10 and out through the cold fluid outlet 34. The second pipe 30 therefore forms a bypass around the mixing chamber 14 allowing a proportion of cold fluid entering into housing 12 through the cold fluid inlet 24 to bypass the mixing chamber 14 entirely and simply flow out of the mixing pipe housing 12, via the cold fluid outlet 34, and to a boiler (not shown) for reheating.

The rest of the cold fluid entering the housing 12 through the cold fluid inlet 24 flows along the first pipe 28 and, if required into the mixing chamber 14 whereupon it is mixed with hot fluid flowing into the mixing chamber 14 through the hot fluid inlet 22 and inlet opening 32.

The resultant fluid, now at a pre-determined temperature, is able to then flow out of the housing 10 through the main outlet 20 and around the system to provide the required heating to a floor under which the underfloor heating system is located.

The control mechanism for controlling the flow of hot and cold fluid into the mixing chamber 14 will now be described.

The control mechanism includes a main piston 36 and a thermostat 38. In a preferred embodiment, the piston 36 and thermostat 38 are formed as one-piece. One end 40 of the thermostat 38 extends into the mixing chamber 14 while the other end (the "top end") abuts the bottom of a housing 42 which surrounds an overtravel spring 44. The piston 36 is lined with a wax/copper mixture which expands and contracts in response to temperature.

Figure shows the non-use situation where the piston 36 covers both inlet openings 26, 32 therefore closing the path of fluid travelling from either the hot pipe inlet 22 or the cold pipe inlet 28 to the mixing chamber 14.

In use, when the temperature of the fluid within the mixing chamber 14 is too high, the wax mixture expands causing the thermostat 38 to move upwardly against the overtravel spring housing 42. This, in tum, causes the piston 36 to lower thus opening inlet opening 26 to allow cold fluid from the cold fluid pipe 28 to enter the mixing chamber 14 thereby cooling the temperature within.

If, on the other hand, the fluid within the mixing chamber is too low, the wax mixture contracts causing the thermostat 38 to lower. The return spring 18 then forces the piston 36 upwardly thus opening inlet opening 32 to allow hot fluid from the hot fluid pipe 22 to enter the mixing chamber thereby heating the fluid within.

A control knob 46 is connected to the top of the housing 12 of the mixing valve 10 for manual control of the valve 10. The knob 46 is connected to the main housing 12 through a cap 48 which includes a locking cam 50 and the overtravel spring 44 and its housing 42. The knob 46 is attached to the cap 48 by a screw 52 received within an internal thread formed in the top of the cap 48. Rotation of the knob 46 causes compression of the overtravel spring 44 causing vertical movement of a piston 36 thereby opening one of the inlet openings 24, 32 to allow either hot or cold fluid to enter the mixing chamber 14, depending on the direction of rotation of the knob 46.

The cap 46 is sealed within the housing 12 of the mixing valve 10 through a circlip 54, retainer 56 and a plurality of O-ring seals 58.

The above described embodiment has been given by way of example only, and the skilled reader will naturally appreciate that many variations could be made thereto without departing from the scope of the present invention.

## Claims

1. A valve assembly comprising a main housing (12) having an inner mixing chamber (14), the housing (12) including a hot fluid inlet (22), a cold fluid inlet (24) and a main outlet (20), to allow hot and cold fluid to enter the mixing chamber (14) to be mixed therein and to flow from the mixing chamber (14) out of the housing (12) via the main outlet (20),
**characterised in that**,
the housing (12) further including a cold fluid outlet (34) linked directly to the cold fluid inlet (24) via a conduit (30) which has no openings to the mixing chamber (14), to allow a proportion of cold fluid entering the valve housing (12) through the cold fluid inlet (24) to flow out of the cold fluid outlet (34) without entering the mixing chamber (14).

2. A valve assembly according to claim 1, wherein the cold fluid inlet (24) and cold fluid outlet (34) are linked by a bypass conduit (30) that extends across the valve assembly either side of the mixing chamber (14).

3. A valve assembly according to claim 1 or claim 2, further comprising a control mechanism for controlling the flow of hot and cold fluid into the mixing chamber via the hot (22) and cold fluid inlets (24) respectively.

4. A valve assembly according to claim 3, wherein the control mechanism comprises a piston assembly (36).

5. A valve assembly according to claim 4, wherein the piston (36) is lined with a wax/copper mixture which expands and contracts in response to a change in temperature.

6. A valve assembly according to claim 5, wherein expansion or contraction of the mixture causes the piston to move between a first position whereby the hot fluid inlet (22) is closed and the cold fluid inlet (24) is open, a second position whereby the hot fluid inlet (22) and cold fluid inlet (24) are closed and a third position whereby the hot fluid inlet (22) is open and the cold fluid inlet (24) is open.

## Patentansprüche

1. Ventil-Anordnung, umfassend ein Hauptgehäuse (12), das eine innere Mischkammer (14) aufweist, sowie einen Heiß-Flüssigkeits-Einlaß (22), einen Kalt-Flüssigkeits-Auslaß (24) und einen Hauptauslaß (20), um der Heiß-Flüssigkeit und der Kalt-Flüssigkeit zu ermöglichen, in die Mischkammer (14) einzutreten und in ihr gemischt zu werden und aus der Mischkammer (14) des Gehäuses (12) über den Hauptauslaß (20) auszuströmen, **dadurch gekennzeichnet, daß** das Gehäuse (12) des weiteren einen Kalt-Flüssigkeits-Auslaß (34) aufweist, der direkt mit dem Kalt-Flüssigkeits-Einlaß (24) über eine Leitung (30) verbunden ist, die keine Öffnungen zu der Mischkammer (14) hat, um **dadurch** einem Anteil der Kalt-Flüssigkeit, die in das VentilGehäuse (12) durch den Kalt-Flüssigkeits-Einlaß (24) eintritt, zu ermöglichen, aus dem Kalt-Flüssigkeits-Auslaß (34) auszuströmen, ohne in die Mischkammer (14) einzutreten.

2. Ventil-Anordnung nach Anspruch 1, **dadurch gekennzeichnet, daß** der Kalt-Flüssigkeits-Einlaß (24) und der Kalt-Flüssigkeits-Auslaß (34) durch eine Bypass-Leitung (30) verbunden sind, die sich an jeder Seite der Mischkammer (14) über die Ventil-Anordnung erstreckt.

3. Ventil-Anordnung nach Anspruch 1 oder 2, **gekennzeichnet durch** einen Steuermechanismus, der dazu dient, die Heiß- und Kalt-FlüssigkeitsStrömung in die Mischkammer über den Heiß-Flüssigkeits-Einlaß (22) bzw. den Heiß-Flüssigkeits-Auslaß (24) zu steuern.

4. Ventil-Anordnung nach Anspruch 3, **dadurch gekennzeichnet, daß** der Steuermechanismus eine Kolbenanordnung (36) aufweist.

5. Ventil-Anordnung nach Anspruch 4, **dadurch gekennzeichnet, daß** der Kolben (36) mit einem Wachs / Kupfer-Gemisch beschichtet ist, das sich in Abhängigkeit von einer Temperaturänderung ausdehnt und zusammenzieht.

6. Ventil-Anordnung nach Anspruch 5, **dadurch gekennzeichnet, daß** die Ausdehnung oder das Zusammenziehen des Gemisches bewirken, daß sich der Kolben zwischen einer ersten Position, in der der Heiß-Flüssigkeits; Einlaß (22) geschlossen ist und der Kalt-Flüssigkeits-Einlaß (24) geöffnet ist, und einer zweiten Position, in der der Heiß-Flüssigkeits-Einlaß (22) und der Kalt-Flüssigkeits-Einlaß (24) geschlossen sind, bewegt, sowie einer dritten Position, in der der Heiß-Flüssigkeits-Einlaß (22) geöffnet und der Kalt-Flüssigkeits-Einlaß (24) geöffnet sind.

## Revendications

1. Ensemble de soupape comprenant un boîtier principal (12) ayant une chambre de mélange interne (12), le boîtier (12) comprenant une entrée de fluide chaud (22), une entrée de fluide froid (24) et une sortie principale (20), pour permettre aux fluides chaud et froid d'entrer dans la chambre de mélange (14) afin d'être mélangés dans celle-ci et de s'écouler de la chambre de mélange (14) hors du boîtier (12) par l'intermédiaire de la sortie principale (20),
**caractérisé par le fait que**,
le boîtier (12) comprend en outre une sortie de fluide froid (34) directement reliée à l'entrée de fluide froid (24) par l'intermédiaire d'une conduite (30) qui n'a pas d'ouvertures vers la chambre de mélange (24), pour permettre à une partie du fluide froid entrant dans le boîtier de soupape (12) par l'entrée de fluide froid (24) de s'écouler hors de la sortie de fluide froid (34) sans entrer dans la chambre de mélange (14).

2. Ensemble de soupape selon la revendication 1, dans lequel l'entrée de fluide froid (24) et la sortie de fluide froid (34) sont reliées par une conduite de dérivation (30) qui s'étend à travers l'ensemble de soupape de chaque côté de la chambre de mélange (14).

3. Ensemble de soupape selon la revendication 1 ou la revendication 2, comprenant en outre un mécanisme de commande pour commander l'écoulement des fluides chaud et froid dans la chambre de mélange respectivement par l'intermédiaire des entrées de fluide chaud (22) et froid (24).

4. Ensemble de soupape selon la revendication 3, dans lequel le mécanisme de commande comprend un ensemble piston (36).

5. Ensemble de soupape selon la revendication 4, dans lequel le piston (36) est recouvert d'un mélange cire/cuivre qui se dilate et se contracte en réponse à un changement de température.

6. Ensemble de soupape selon la revendication 5, dans lequel la dilatation ou la contraction du mélange amène le piston à se déplacer entre une première position par laquelle l'entrée de fluide chaud (22) est fermée et l'entrée de fluide froid (24) est ouverte, une seconde position par laquelle l'entrée de fluide chaud (22) et l'entrée de fluide froid (24) sont fermées, et une troisième position par laquelle l'entrée de fluide chaud (22) est ouverte et l'entrée de fluide froid (24) est fermée.
